# EUROPÄISCHE PATENTSCHRIFT

(11) **EP 2 413 212 B1**
(45) Veröffentlichungstag und Bekanntmachung des Hinweises auf die Patenterteilung: **15.05.2013**
(21) Anmeldenummer: 10170756.0
(22) Anmeldetag: 26.07.2010
(51) Int. Cl.: G05B 19/418, H04L 12/40

(54) **Verfahren zum Datenaustausch von Peripheriedaten und Untermodul**
Method for exchanging periphery data and submodule
Procédé d'échange de données de données périphériques et sous-module

(43) Veröffentlichungstag der Anmeldung: 01.02.2012
(73) Patentinhaber: Siemens Aktiengesellschaft, 80333 München (DE)
(72) Erfinder: Biehler, Georg, 90453 Nürnberg (DE); Hammon, Harald, 90471 Nürnberg (DE)

(56) Entgegenhaltungen:
- US-A1- 2006 161 705
- US-A1- 2009 138 693

## Beschreibung

Die Erfindung betrifft ein Verfahren zum Datenaustausch von Peripheriedaten zwischen einem Hauptmodul und einem Untermodul, wobei an dem Untermodul eine Peripherieeinheit angeschlossen ist und über diese Daten eingelesen oder ausgegeben werden, mit den Schritten:
- Festfestlegen eines Peripherietransferdatensatzes, wobei dieser einen ersten Adressbereich der Peripherieeinheit und einem zweiten Adressbereich des Hauptmoduls aufweist,
- abbilden der in dem ersten Adressbereich vorherrschenden Peripheriedaten in den zweiten Adressbereich und/oder umgekehrt.

Des Weiteren betrifft die Erfindung ein Untermodul zum Datenaustausch von Peripheriedaten mit einem Hauptmodul umfassend ein Betriebssystem, ein Applikationsprogramm zum Lösen von Steuerungsaufgaben, eine Schnittstelle, welche ausgestaltet ist Daten von einer Peripherieeinheit einzulesen und/oder an die Peripherieeinheit auszugeben.

**Aus der** US 2006/161705 A1 **ist ein Verfahren zum Datenaustausch zwischen einem Hauptmodul und einem Untermodul bekannt, bei welchem bei Erreichen einer maximalen Datenmenge ein Telegramm in eine Vielzahl von weiteren Telegrammen aufgeteilt wird.**

Im Bereich der Feldbusse wie z.B. dem Profibus DP sind bereits Verfahren und Steuerungssysteme bekannt, bei denen eine überlagerte Steuerung mit einem Feldbus verbunden ist und dieser Feldbus wiederum mit Automatisierungseinheiten, welche eine dezentrale Peripherie darstellen. Diese Automatisierungseinheiten sind in der Regel als Eingabe-/Ausgabebaugruppen ausgestaltet und können in einer Automatisierungsanlage vor Ort an den Maschinen direkt mit Sensoren und Aktoren verbunden werden. Diese dezentralen Eingabe-/Ausgabebaugruppen können direkt an ein Hauptmodul oder über ein Untermodul an das Hauptmodul angeschlossen sein. Bei letzterer Konfiguration steht ein Inbetriebsetzer bei einer derartigen Automatisierungsanlage vor dem Problem, die Eingabe-/Ausgabeadressen der dezentralen Peripherie auf Adressbereiche in dem Hauptmoentsprechend abzubilden. Hierzu wird nach dem derzeit bekannten Stand der Technik in einem Applikationsprogramms des Untermoduls, wobei das Applikationsprogramm beispielsweise als ein zyklisch ablaufendes SPS-Programm ausgestaltet ist, die Zuordnung mittels eines Kopiermechanismusses vorgenommen. Weiterhin stehen in dem Applikationsprogramm sogenannte Funktionsbausteine wie DB-Send und DB-Receive zur Verfügung. Die Peripheriedaten der Eingabe-/Ausgabeeinheiten werden von dem Untermodul eingelesen und in einem Datenbaustein abgelegt, wobei eine Zuordnung zu einem Adressbereich in dem Hauptmodul stattfindet und die so zugeordneten Adressbereiche bzw. deren Dateninhalte werden mit einem Sendebefehl zu dem Hauptmodul gesendet. Da das Applikationsprogramm die Eingabe-/Ausgabedaten der dezentralen Peripherie kopiert und über eine Datenschnittstelle dem übergeordneten Hauptmodul zur Verfügung stellt, wird dieses zusätzlich mit Rechenaufwand belastet. Diese zusätzliche Belastung geht auf eine Ablaufzeit des Applikationsprogrammes in dem Abarbeitungszyklus einer speicherprogrammierbaren Steuerung. Die Laufzeit dieses Applikationszyklusses ist maßgeblich für eine Aktualität der Eingabe-/Ausgabedaten zuständig. Für einen Anlagenbetreiber mit einer industriellen Automatisierungsanlage, welche mit Automatisierungsgeräten ausgestattet ist, die dezentrale Peripheriedaten an ein übergeordnetes Hauptmodul weitergeben, ist es aufgrund eines optimierten Steuerungsprozesses wichtig die Peripheriedaten zum "richtigen" Zeitpunkt zu erhalten. Darüber hinaus ist es für den Anlagenbetreiber wünschenswert, dass das Applikationsprogramm nicht mit unnötigen Kopieraufgaben beschäftigt wird.

Es ist Aufgabe der vorliegenden Erfindung ein Verfahren zum Datenaustausch anzugeben, bei welchem das Applikationsprogramm entlastet wird. Weiterhin ist es Aufgabe der Erfindung ein Untermodul zum Datenaustausch von Peripheriedaten mit einem Hauptmodul anzugeben, welches derart ausgestaltet ist, das eine Entlastung des Applikationsprogrammes erreichbar ist.

Für das eingangs genannte Verfahren wird die Aufgabe dadurch gelöst, dass eine Kopierliste erstellt wird, welche den Peripherietransferdatensatz enthält, wobei diesem eine Datenbereichsangabe und eine Richtungsangabe zugewiesen wird, die Kopierliste dann in dem Untermodul abgelegt wird, und ein Transfermittel in ein Betriebssystem eingebettet wird, wobei das Transfermittel auf die Kopierliste zugreift und anhand des Peripherietransferdatensatzes die Peripheriedaten den entsprechenden Adressbereichen zuweist. Mit dieser Lösung wird eine Verlagerung eines Kopierzyklusses in das Betriebssystem eines Untermodules erreicht und damit eine Unabhängigkeit von einem Applikationsprogramm, welches in dem Untermodul abläuft. Ein Applikationszyklus wird nicht mehr durch die Kopieraufgaben von Peripheriedaten verzögert. In einer weiteren Ausgestaltung des Verfahrens wird in dem Untermodul ein Speicherbereich zur Verfügung gestellt, welcher aus dem Peripherietransferdatensatz abgeleitet wird und mit diesem Speicherbereich eine Datenschnittstelle für die Peripheriedaten zum Hauptmodul und umgekehrt bereitgestellt wird. Die Datenschnittstelle, die durch einen Speicherbereich definiert wird, kann als eine Art Transferbereich im Untermodul angesehen werden. In diesem Transferbereich können Peripheriedaten der Art Eingabedaten, Ausgabedaten oder Mischdaten Eingabe-/Ausgabedaten, einer beliebigen Datenschnittstelle und einer vorgebbaren Länge abgelegt werden. Die Datenstruktur und die Länge entspricht sodann der Datenstruktur, wie sie an den Peripherieeinheiten vorherrscht. Dabei ist die Datenschnittstelle weiterhin dazu ausgestaltet, mögliche Peripheriezugriffsfehler beim Kopieren aufzudecken. Diese Peripheriezugriffsfehler können sodann beispielsweise durch die bei einem PROFINET IO-Protokoll gängigen Nutzdatenbegleitern (IOPS und IOCS) aufgedeckt werden, damit erhält eine überlagerte Steuerung bzw. das Hauptmodul Informationen über Zugriffsprobleme der unterlagerten Peripherie.

In einer weiteren Ausgestaltung wird der Kopierliste eine Prioritätsliste zugefügt, welche von dem Transfermittel für zeitkritische Daten vorrangig bearbeitet wird. Bei den Peripherieeinheiten können beispielsweise wichtige Datensätze und/oder Alarme abgesetzt werden auf die schnellstmöglich reagiert werden muss. Ist in der Prioritätsliste beispielsweise ein derartiger Alarm hinterlegt, so ist das Transfermittel dazu ausgestaltet diese zeitkritischen Alarme vorrangig zu bearbeiten.

Vorteilhaft ist es auch wenn ein in dem Untermodul ablaufendes Applikationsprogramm auf die ausgetauschten Peripheriedaten zugreifen kann.

In einem weiteren zweckmäßigen Verfahrensschritt wird die Kopierliste mit einem Konfigurationswerkzeug erstellt, wobei mit dem Konfigurationswerkzeug auf Konfigurationsdaten bezüglich eines physikalischen Aufbaus von dem Hauptmodul und diesem unterlagerten Untermodulen zugegriffen wird, wobei die Peripherieeinheiten in zentral zu dem Untermodul zugeordnete Peripherieeinheiten und in dezentral zu dem Untermodul zugeordnete Peripherieeinheiten unterteilt werden. Um eine physikalische Konfiguration von Automatisierungskomponenten in einem Anlagenverbund zu konfigurieren stehen bereits Konfigurationswerkzeuge bereit. Diese Konfigurationswerkzeuge werden mit Vorteil verfahrenstechnisch weitergebildet, so dass eine entsprechende Konfiguration des Anwenders in Hauptmodule, Untermodule zentralen oder dezentralen Baugruppen projektiert werden kann.

Vorrichtungsgemäß wird die eingangs genannte Aufgabe durch ein Untermodul zum Datenaustausch von Peripheriedaten mit einem Hauptmodul gelöst, dabei umfasst das Untermodul ein Betriebssystem, ein Applikationsprogramm zum Lösen von Steuerungsaufgaben, eine Schnittstelle, welche ausgestaltet ist Daten von einer Peripherieeinheit einzulesen und/oder an die Peripherieeinheit auszubilden, dabei zeichnet sich das Untermodul dadurch aus, dass ein in das Betriebssystem eingebettetes Transfermittel vorhanden ist, wobei das Transfermittel ausgestaltet ist auf eine Kopierliste zuzugreifen und einen Datenaustausch zwischen dem Untermodul und dem Hauptmodul vorzunehmen, wodurch eine Entlastung des Applikationsprogramms erreichbar ist. Für einen Anlagenbetreiber und einem Projekteur, welcher die entsprechende Anlage mit derartigen Untermodulen projektieren muss, ergeben sich folgende Vorteile:
Ein Anwender kann eine "durchscheinende" Peripherie für einen Datenaustausch zu einem Hauptmodul einfach konfigurieren. Eine Performance des Applikationsprogrammes wird gesteigert, da das Applikationsprogramm nicht mehr mit Kopieraufgaben für Peripheriedaten betraut ist. Eine Aktualität der Daten wird somit ebenfalls gesteigert. Dadurch, dass das Transfermittel in das Betriebssystem eingebettet ist, kann ein Kopierzyklus schneller als in dem Applikationsprogramm durchgeführt werden.

Vorzugsweise ist das Untermodul mit einer Datenschnittstelle für die Peripheriedaten zum Hauptmodul und umgekehrt, mit einer Kopierliste, wobei in der Kopierliste ein Peripherietransferdatensatz enthalten ist und dieser eine Datenbereichsangabe und eine Richtungsangabe aufweist, und das Transfermittel weiterhin dazu ausgestaltet ist die Peripheriedaten gemäß der Kopierliste in der Datenschnittstelle bereitzustellen, ausgestattet. Vorzugsweise ist dabei die Datenschnittstelle als ein vorgebbarer Speicherbereich in dem Untermodul ausgestaltet.

In einer weiteren Ausgestaltung weist das Untermodul eine interne Schnittstelle zum Anschließen von Peripherieeinheiten, die zentral dem Untermodul zugeordnet sind, auf. Dabei kann man sich das Untermodul als eine erweiterbare dezentrale Peripherieeinheit mit einer integrierten CPU vorstellen. An diese erweiterbare Peripherieeinheit können je nach Anwendungsfall zusätzliche Baugruppen zur Ein- und Ausgabe von Daten angesteckt werden.

In einer weiteren Ausgestaltung weist das Untermodul eine zweite Schnittstelle auf, diese zweite Schnittstelle ist zum Anschließen von Peripherieeinheiten, die dezentral dem Untermodul zugeordnet sind, ausgestaltet, wobei die zweite Schnittstelle als eine Feldbusschnittstelle ausgestaltet ist.

Vorzugsweise weist das Untermodul eine erste Schnittstelle zum Anschließen des Hauptmodules auf. Die erste Schnittstelle könnte beispielsweise als eine IO-Schnittstelle für Profinet, d.h. für ein Industrial Ethernet, ausgestaltet sein, und die zweite Schnittstelle könnte beispielsweise als eine Profibus DP-Schnittstelle ausgestaltet sein.

Um auf zeitkritische Signale oder Alarme zu reagieren, weist das Untermodul zweckmäßigerweise ein Prioritätsmittel auf, welches ausgestaltet ist auf eine Prioritätsliste zuzugreifen und entsprechend eines auszutauschenden zeitkritischen Peripheriedatums das Transfermittel entsprechend zu steuern, wobei dieses ausgestaltet ist, auf ein Prioritätssignal zu reagieren.

Ein Ausführungsbeispiel und weitere Vorteile der Erfindung sind in der Zeichnung näher erläutert. Es zeigen:
- FIG 1: ein Hauptmodul und ein Untermodul in einem Feldbusverbund,
- FIG 2: ein Untermodul und
- FIG 3: einen Aufbau einer Kopierliste.

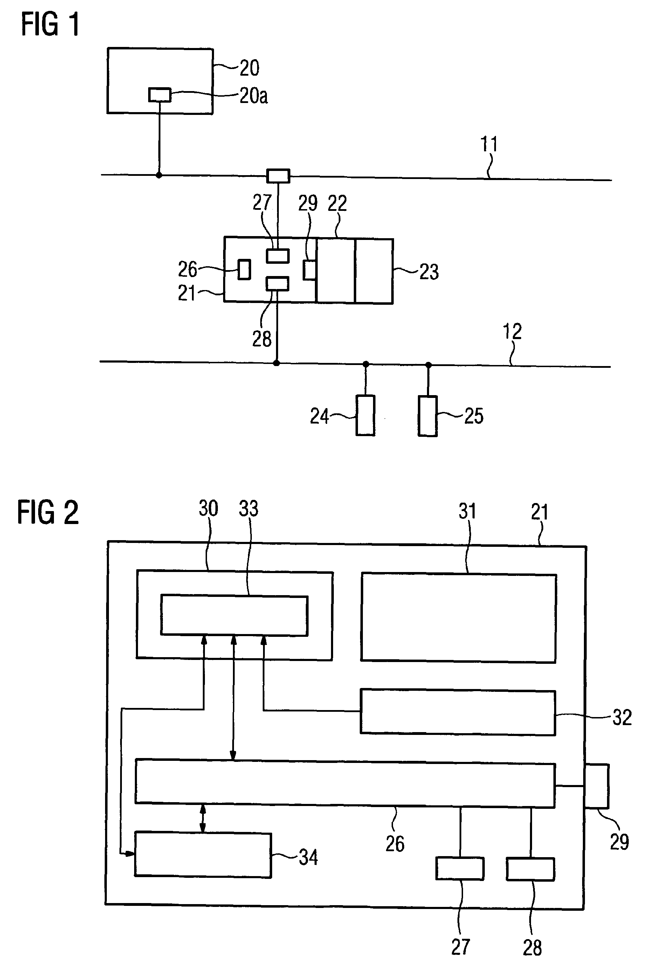

Gemäß FIG 1 ist eine Automatisierungsanlage mit einem Hauptmodul 20 und einem Untermodul 21 abgebildet. Über einen ersten Feldbus 11 ist das Hauptmodul 20 mit einer Hauptmodulschnittstelle 20a an das Untermodul 21 angeschlossen, für den Anschluss an den ersten Feldbus 11 weist das Untermodul 21 eine erste Schnittstelle 27 auf. Mit einer zweiten Schnittstelle 28 ist das Untermodul 21 an einen zweiten Feldbus 12 angeschlossen. Dieser zweite Feldbus 12 wiederum steht in Verbindung mit einer dritten Peripherieeinheit 24 und einer vierten Peripherieeinheit 25, dabei sind die Peripherieeinheiten 24,25 als dezentral zu dem Untermodul 21 angeordnete Peripherieeinheiten anzusehen. Im Gegenzug zu den dezentralen Peripherieeineheiten weist das Untermodul 21 eine erste Peripherieeinheit 22 und eine zweite Peripherieeinheit 23, als zentral zu dem Untermodul 21 angeordnete Peripherieeinheiten, auf. Für einen Datenaustausch von Peripheriedaten zwischen dem Hauptmodul 20 und dem Untermodul 21, wobei an dem Untermodul 21 die Peripherieeinheiten 22,23 direkt angeschlossen sind und die Peripherieeinheiten 24,25 entfernt von dem Untermodul 21 über den zweiten Feldbus 12 angeschlossen sind, werden Peripherietransferdatensätze festgelegt, wobei diese Peripheriedatensätze einen ersten Adressbereich der jeweiligen Peripherieeinheiten 22,23,24,25 und einen zweiten Adressbereich des Hauptmoduls 20 aufweisen. Die Peripherietransferdatensätze 41,42,43 (siehe FIG 2) dienen zum Abbilden der in dem ersten Adressbereich vorherrschenden Peripheriedaten in den zweiten Adressbereich und/oder umgekehrt. Für diese Abbildung wird eine Datenschnittstelle 26 im Untermodul bereitgestellt.

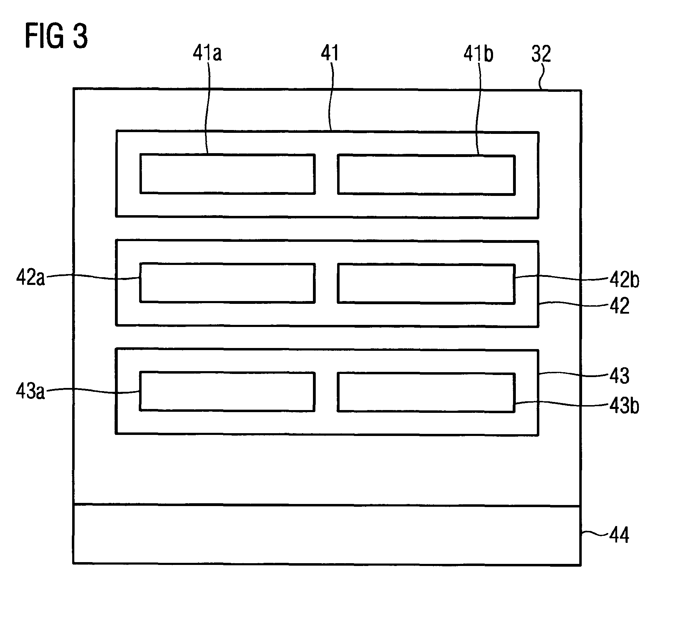

In FIG 2 ist das aus FIG 1 bekannte Untermodul 21 schematisch dargestellt. Das Untermodul 21 weist ein Betriebssystem 30, ein Applikationsprogramm 31, eine Datenschnittstelle 26, eine Kopierliste 32, ein Prioritätsmittel 34 und Schnittstellen zur Kommunikation zur Außenwelt auf. Die Schnittstellen sind zum Einen eine interne Schnittstelle 29, an welche weitere Peripheriebaugruppen direkt an das Untermodul 21 angesteckt werden können. Die erste Schnittstelle 27 dient für den Anschluss an eine übergeordnete Ebene über einen Feldbus. Die zweite Schnittstelle 28 dient für den Anschluss an eine untergeordnete Ebene über einen weiteren Feldbus. Das Betriebssystem 30 steuert die internen Abläufe des Untermoduls 21, vorzugsweise ist das Untermodul 21 als eine eigenständige speicherprogrammierbare Steuerung ausgestaltet. Ein anwendungsabhängiges Applikationsprogramm 31 wird eingesetzt zum Lösen von steuerungstechnischen Aufgaben. In das Betriebssystem 30 ist ein Transfermittel eingebettet, welches dazu ausgestaltet ist, auf die Kopierliste 32 zuzugreifen und einen Datenaustausch zwischen dem Untermodul 21 und dem Hauptmodul 20 vorzunehmen, wodurch eine Entlastung des Applikationsprogramms erreichbar ist. Die Peripheriedaten können vom Untermodul zum Hauptmodul aber auch vom Hauptmodul zum Untermodul ausgetauscht werden. In der Kopierliste 32 sind mehrere Peripherietransferdatensätze 41,42,43 (siehe FIG 3) enthalten. Die Peripherietransferdatensätze weisen wiederum eine Datenbereichsangabe 41a,42a,43a und eine Richtungsangabe 41b,42b, 43b auf. Das Transfermittel 33 ist weiterhin dazu ausgestaltet, die Peripheriedaten gemäß den Angaben in der Kopierliste 32 in der Datenschnittstelle bereitzustellen. Beispielsweise ist in der Kopierliste die Angabe eines Slots, eines Subslots und Adresstypes für einen IO-Controller eingetragen. Im Untermodul 21 wird dann mit der Kopierliste ein Adresstyp, eine Startadresse, eine Länge und eventuell ein Prozessimage für Eingangsdaten bezeichnet. Für Ausgangsdaten wird ebenfalls eine Startadresse, eine Länge und ein Prozessimage in der Kopierliste vereinbart. Eine Richtungsangabe 41b dient der Angabe wohin die Eingabe-/Ausgabedaten kopiert werden sollen. Beispielsweise ist eine Richtungsangabe vom Untermodul zum Hauptmodul eine gültige Richtungsangabe.

Mit einem Konfigurationswerkzeug wird die Kopierliste 32 erstellt. Das Konfigurationswerkzeug greift dabei auf physikalische Aufbaudaten des in FIG 1 dargestellten Automatisierungsaufbaus zurück. Für die Peripherieeinheiten 22,...,25 gilt, dass sie entweder zentral zu dem Untermodul oder dezentral zu dem Untermodul angeordnet sein können. Ein Anwender kann nun anhand des Konfigurationswerkzeuges zentrale oder dezentrale Peripherieeinheiten, Submodule, Module oder Gruppenfelder in der Peripherie selektieren, durch diese programmtechnisch ausgeführte Selektion wird ein entsprechender Transferbereich für die Schnittstelle 26 zur Verfügung gestellt. Dem Fachmann ist diese Schnittstelle auch als eine I-Device-Schnittstelle bekannt.

Für eine Projektierung mit dem Konfigurationswerkzeug ergeben sich für den Anlagenanwender folgende Vorteile:
Ein Anwender kann eine durchscheinende Peripherie an der I-Device-Schnittstelle einfach konfigurieren. Die Performance der Peripherietransferbereiche, d.h. die "frische" der Daten ist optimiert und unabhängig von einem Kopierzyklus, welcher normalerweise in einem Applikationsprogramm mit einem Applikationszyklus ausgeführt werden würde.

FIG 3 zeigt eine Kopierliste 32 mit drei Peripherietransferdatensätzen 41,42,43. Ein erster Peripherietransferdatensatz 41 weist eine erste Bereichsangabe 41a und eine erste Richtungsangabe 41b auf. Für den zeitkritischen Datenaustausch von beispielsweise Alarmen oder besonderen Datensätzen steht in der Kopierliste 32 eine Prioritätsliste 44 zur Verfügung.

## Patentansprüche

1. Verfahren zum Datenaustausch von Peripheriedaten zwischen einem Hauptmodul (20) und einem Untermodul (21), wobei an dem Untermodul (21) eine Peripherieeinheit (22,23,24,25) angeschlossen ist und über diese Daten eingelesen oder ausgeben werden,
mit den Schritten:
- festlegen eines Peripherietransferdatensatzes (41,42,43), wobei dieser einen ersten Adressbereich der Peripherieeinheit (22,23,24,25) und einem zweiten Adressbereich des Hauptmoduls (20) aufweist,
- abbilden der in dem ersten Adressbereich vorherrschenden Peripheriedaten in den zweiten Adressbereich und/oder umgekehrt,
**dadurch gekennzeichnet, dass**
- eine Kopierliste (32) erstellt wird, welche den Peripherietransferdatensatz (41,42,43) enthält, wobei diesem eine Datenbereichsangabe (41a,42a,43a) und eine Richtungsangabe (41b,42b,43b) zugewiesen wird,
- die Kopierliste (32) in dem Untermodul (21) abgelegt wird, und
- ein Transfermittel (33) in ein Betriebssystem (30) eingebettet wird, wobei das Transfermittel (33) auf die Kopierliste (32) zugreift und anhand des Peripherietransferdatensatz (41,42,43) die Peripheriedaten den entsprechenden Adressbereichen zuweist.

2. Verfahren nach Anspruch 1, wobei in dem Untermodul (21) ein Speicherbereich zur Verfügung gestellt wird, welcher aus dem Peripherietransferdatensatz (41,42,43) abgeleitet wird und mit diesem Speicherbereich eine Datenschnittstelle (26) für die Peripheriedaten zum Hauptmodul (20) und umgekehrt bereitgestellt wird.

3. Verfahren nach Anspruch 1 oder 2, wobei der Kopierliste (32) eine Prioritätsliste (44) zugefügt wird, welche von dem Transfermittel (33) für zeitkritische Daten vorrangig bearbeitet wird.

4. Verfahren nach einem der Ansprüche 1 bis 3, wobei ein in dem Untermodul (21) ablaufendes Applikationsprogramm (31) auf die ausgetauschten Peripheriedaten zugreift.

5. Verfahren nach einem der Ansprüche 1 bis 4, wobei die
- Kopierliste (32) mit einem Konfigurationswerkzeug erstellt wird, und
- mit dem Konfigurationswerkzeug auf Konfigurationsdaten bezüglich eines physikalischen Aufbaus von dem Hauptmodul (20) und diesem unterlagerten Untermodulen (21) zugegriffen wird,
- wobei die Peripherieeinheiten (22,23,24,25) in zentral zu dem Untermodul (21) zugeordnete Peripherieeinheiten (22,23) und in dezentral zu dem Untermodul (21) zugeordnete Peripherieeinheiten (24,25) unterteilt werden.

6. Untermodul (21) zum Datenaustausch von Peripheriedaten mit einem Hauptmodul (20) umfassend
- ein Betriebssystem (30),
- ein Applikationsprogramm (31) zum Lösen von Steuerungsaufgaben,
- eine Schnittstelle (28,29), welche ausgestaltet ist Daten von einer Peripherieeinheit (22,23,24,25) einzulesen und/oder an die Peripherieeinheit (22,23,24,25) auszugeben,
**gekennzeichnet durch**
- ein in das Betriebssystem (30) eingebettetes Transfermittel (33),
wobei das Transfermittel (33) ausgestaltet ist auf eine Kopierliste (32) zu zugreifen und einen Datenaustausch zwischen dem Untermodul (21) und dem Hauptmodul (20) vorzunehmen, wodurch eine Entlastung des Applikationsprogramms (31) erreichbar ist.

7. Untermodul nach Anspruch 6, mit einer Datenschnittstelle (26) für die Peripheriedaten zum Hauptmodul (20) und umgekehrt, mit einer Kopierliste (32), wobei in der Kopierliste (32) ein Peripherietransferdatensatz (41,42,43) enthalten ist und dieser eine Datenbereichsangabe (41a,42a,43a) und eine Richtungsangabe (41b,42b,43b) aufweist, und das Transfermittel (33) weiterhin dazu ausgestaltet ist die Peripheriedaten gemäß der Kopierliste in der Datenschnittstelle bereitzustellen.

8. Untermodul nach Anspruch 6 oder 7, mit einer internen Schnittstelle (29) zum Anschließen von Peripherieeinheiten (22,23), die zentral dem Untermodul (21) zugeordnet sind.

9. Untermodul nach einem der Ansprüche 6 bis 8, mit einer zweiten Schnittstelle (29) zum Anschließen von Peripherieeinheiten (24,25), die dezentral dem Untermodul (21) zugeordnet sind, wobei die zweite Schnittstelle als eine Feldbusschnittstelle ausgestaltet ist.

10. Untermodul nach einem der Ansprüche 6 bis 9, mit einer ersten Schnittstelle (29) zum Anschließen des Hauptmoduls (20).

11. Untermodul nach einem der Ansprüche 6 bis 10, mit einem Prioritätsmittel (34), welches ausgestaltet ist auf eine Prioritätsliste (44) zu zugreifen und entsprechend eines auszutauschenden zeitkritischen Peripheriedatums das Transfermittel entsprechend zu steuern, wobei dieses ausgestaltet ist auf ein Prioritätssignal zu reagieren.

## Claims

1. Method for the data exchange of peripheral data between a main module (20) and a submodule (21), wherein a peripheral unit (22, 23, 24, 25) is connected to the submodule (21) and data are read in or output via said peripheral unit, comprising the following steps:
- defining a peripheral transfer data record (41, 42, 43), wherein the latter has a first address range of the peripheral unit (22, 23, 24, 25) and a second address range of the main module (20),
- mapping the peripheral data prevailing in the first address range into the second address range and/or vice versa, **characterized in that**
- a copy list (32) is created, which contains the peripheral transfer data record (41, 42, 43), wherein the latter is allocated a data range indication (41a, 42a, 43a) and a direction indication (41b, 42b, 43b),
- the copy list (32) is stored in the submodule (21) and
- a transfer means (33) is embedded into an operating system (30), wherein the transfer means (33) accesses the copy list (32) and allocates the peripheral data to the corresponding address ranges on the basis of the peripheral transfer data record (41, 42, 43).

2. Method according to Claim 1, wherein a memory area derived from the peripheral transfer data record (41, 42, 43) is made available in the submodule (21) and, with said memory area, a data interface (26) for the peripheral data to the main module (20) and vice versa is provided.

3. Method according to Claim 1 or 2, wherein a priority list (44) is added to the copy list (32), said priority list being processed as a priority by the transfer means (33) for time-critical data.

4. Method according to any of Claims 1 to 3, wherein an application program (31) executed in the submodule (21) accesses the exchanged peripheral data.

5. Method according to any of Claims 1 to 4, wherein
- the copy list (32) is created by means of a configuration tool, and
- the configuration tool accesses configuration data with regard to a physical construction of the main module (20) and submodules (21) subordinate thereto,
- wherein the peripheral units (22, 23, 24, 25) are subdivided into peripheral units (22, 23) assigned centrally to the submodule (21) and into peripheral units (24, 25) assigned to the submodule (21) in a decentralized manner.

6. Submodule (21) for the data exchange of peripheral data with a main module (20), comprising
- an operating system (30),
- an application program (31) for implementing control tasks,
- an interface (28, 29), which is designed for reading in data from a peripheral unit (22, 23, 24, 25) and/or outputting data to the peripheral unit (22, 23, 24, 25),
**characterized by**
- a transfer means (33) embedded into the operating system (30),
wherein the transfer means (33) is designed to access a copy list (32) and to perform a data exchange between the submodule (21) and the main module (20), as a result of which it is possible to achieve a reduction of the burden on the application program (31).

7. Submodule according to Claim 6, comprising a data interface (26) for the peripheral data to the main module (20) and vice versa, comprising a copy list (32), wherein the copy list (32) contains a peripheral transfer data record (41, 42, 43) and the latter has a data range indication (41a, 42a, 43a) and a direction indication (41b, 42b, 43b), and the transfer means (33) is furthermore designed to provide the peripheral data in accordance with the copy list in the data interface.

8. Submodule according to Claim 6 or 7, comprising an internal interface (29) for connecting peripheral units (22, 23) that are assigned centrally to the submodule (21).

9. Submodule according to any of Claims 6 to 8, comprising a second interface (29) for connecting peripheral units (24, 25) that are assigned to the submodule (21) in a decentralized manner, wherein the second interface is designed as a field bus interface.

10. Submodule according to any of Claims 6 to 9, comprising a first interface (29) for connecting the main module (20).

11. Submodule according to any of Claims 6 to 10, comprising a priority means (34) which is designed to access a priority list (44) and to correspondingly control the transfer means in accordance with a time-critical peripheral datum to be exchanged, wherein said transfer means is designed to react to a priority signal.

## Revendications

1. Procédé d'échange de données périphériques entre un module ( 20 ) principal et un module ( 21 ) inférieur, dans lequel une unité ( 22, 23, 24, 25 ) périphérique est raccordée au module ( 21 ) inférieur et par celle-ci des données peuvent être lues ou émises,
comprenant les stades dans lesquels :
- on fixe un jeu ( 41, 42, 43 ) de données de transfert périphériques, ce jeu ayant une première zone d'adresse de l'unité ( 22, 23, 24, 25 ) périphérique et une deuxième zone d'adresse du module ( 20 ) principal,
- on reproduit dans la deuxième zone d'adresse les données périphériques régnant précédemment dans la première zone d'adresse et/ou inversement,
**caractérisé en ce que**
- on établit une ligne ( 32 ) de copiage, qui contient le jeu ( 41, 42, 43 ) de données de transfert périphériques en affectant à celui-ci une indication ( 41a, 42a, 43a ) de zone de données et une indication ( 41b, 42b, 43b ) de direction,
- on met la liste ( 32 ) de copiage dans le module ( 21 ) inférieur, et
- on incorpore un moyen ( 33 ) de transfert dans un système ( 30 ) de fonctionnement, le moyen ( 33 ) de transfert accédant à la liste ( 32 ) de copiage et, au moyen du jeu ( 41, 42, 43 ) de données de transfert périphériques affectant les données périphériques, aux zones d'adresse correspondantes.

2. Procédé suivant la revendication 1, dans lequel on met à disposition dans le module ( 21 ) inférieur une zone de mémoire, qui est déduite du jeu ( 41, 42, 43 ) de données de transfert périphériques et, par cette zone de mémoire, on met à disposition une interface ( 26 ) de données pour les données périphériques vers le module ( 20 ) principal et inversement.

3. Procédé suivant la revendication 1 ou 2, dans lequel on ajoute à la liste ( 32 ) de copiage une liste ( 44 ) de priorité, qui est traitée prioritairement par le moyen ( 33 ) de transfert pour des données critiques du point de vue du temps.

4. Procédé suivant l'une des revendications 1 à 3, dans lequel un programme ( 31 ) d'application se déroulant dans le module ( 21 ) inférieur accède aux données périphériques échangées.

5. Procédé suivant l'une des revendications 1 à 4, dans lequel :
- on établit une liste ( 32 ) de copiage ayant un outil de configuration, et
- par l'outil de configuration, on accède à des données de configuration contenant une structure physique du module ( 20 ) principal et des modules ( 21 ) inférieurs, qui lui sont subordonnés,
- dans lequel les unités ( 22, 23, 24, 25 ) périphériques sont subdivisées en des unités ( 22, 23 ) périphériques associées de manière centralisée au module ( 21 ) inférieur et des unités ( 24, 25 ) périphériques associées de manière décentralisée au module ( 21 ) inférieur.

6. Module ( 21 ) inférieur pour l'échange de données périphériques avec un module ( 20 ) principal, comprenant
- un système ( 30 ) de fonctionnement,
- un programme ( 31 ) d'application pour résoudre des tâches de commande,
- une interface ( 28, 29 ), qui est conformée pour lire des données d'une unité ( 22, 23, 24, 25 ) périphérique et/ou pour les émettre vers l'unité ( 22, 23, 24, 25 ) périphérique,
**caractérisé par**
- un moyen ( 33 ) de transfert incorporé dans le système ( 30 ) de fonctionnement,
le moyen ( 33 ) de transfert étant conformé pour accéder à une liste ( 32 ) de copiage et pour effectuer un échange de données entre le module ( 21 ) inférieur et le module ( 20 ) principal, grâce à quoi une décharge du programme ( 31 ) d'application peut être obtenue.

7. Module inférieur suivant la revendication 6, comprenant une interface ( 26 ) de données pour les données périphériques allant au module ( 20 ) principal et inversement, comprenant une liste ( 32 ) de copiage, dans lequel, dans la liste ( 32 ) de copiage, est contenu un jeu ( 41, 42, 43 ) de données de transfert périphériques et celui-ci a une indication ( 41a, 42a, 43a ) de zone de données et une indication ( 41b, 42b, 43b ) de direction et le moyen ( 33 ) de transfert est conformé, en outre, pour mettre à disposition dans l'interface de données les données périphériques suivant la liste de copiage.

8. Module inférieur suivant la revendication 6 ou 7, comprenant une interface ( 29 ) interne pour le raccordement d'unités ( 22, 23 ) périphériques, qui sont associées de manière décentralisée au module ( 21 ) inférieur.

9. Module inférieur suivant l'une des revendications 6 à 8, comprenant une deuxième interface ( 25 ) pour le raccordement d'unités ( 24, 25 ) périphériques, qui sont associées de manière décentralisée au module ( 21 ) inférieur, la deuxième interface étant sous la forme d'une interface de bus de terrain.

10. Module inférieur suivant l'une des revendications 6 à 9, comprenant une premier interface ( 29 ) pour le raccordement du module ( 20 ) principal.

11. Module inférieur suivant l'une des revendications 6 à 10, comprenant un moyen ( 34 ) de priorité, qui est conformé pour accéder à une liste ( 44 ) de priorité et pour commander, en conséquence, en fonction d'une donnée périphérique critique du point de vue du temps et à remplacer, le moyen de transfert, celui-ci étant conformé pour réagir à un signal de priorité.
